# EUROPEAN PATENT APPLICATION

(11) **EP 4 636 736 A1**
(43) Date of publication of application: **22.10.2025**
(21) Application number: 24171258.7
(22) Date of filing: 19.04.2024
(51) Int. Cl.: G09B 5/04, G09B 19/04, G10L 17/00, G10L 15/00, H04R 25/00

(54) **METHOD AND ARRANGEMENT FOR CONDUCTING SPEECH INTELLIGIBILITY TRAINING**

(71) Applicant: Sivantos Pte. Ltd., Singapore 539775 (SG)
(72) Inventor: HANNEMANN, Ronny, 91058 Erlangen (DE); SERMAN, Maja, 91058 Erlangen (DE); MANDERS, Alastair James, 91058 Erlangen (DE)
(74) Representative: FDST Patentanwälte

(57) **Abstract**

A method for conducting a speech intelligibility training, and a corresponding arrangement are presented. Herein, a sound from an environment of a participant (36) is recorded. Speech of a speaker (38) different from the participant (36) is extracted from the recorded sound, and at least one characteristic voice property (VP) and/or speech property (SP) of the said speaker (38) is determined from the extracted speech. A plurality of test audio sequences (PS) are created, wherein each of said plurality of test audio sequences (PS) contains synthesized speech of a phoneme or phoneme combination and the speech is synthesized so to conform with said at least one characteristic voice property (VP) and/or speech property (SP) of said speaker (38). A training step is conducted in which one of said test audio sequences (PS) from the plurality is chosen, converted into sound and output to the participant (36). A response (S) of the participant (36) indicating a phoneme or phoneme combination understood by the participant (36) is collected, and a feedback (F) is output to the participant (36) whether or not the phoneme or phoneme combination indicated by the participant (36) as being understood corresponds to the phoneme or phoneme combination output to the participant (36) in the training step.

## Description

The invention relates to a method and an arrangement for conducting a speech intelligibility training, in particular for a user of a hearing instrument.

In general, a hearing instrument is an electronic device being designed to support the hearing of person wearing it (which person is called the "user" or "wearer" of the hearing instrument). In particular, the invention relates to hearing instruments that are specifically configured to at least partially compensate a hearing impairment of a hearing-impaired user. Such hearing instruments are also called "hearing aids". In addition to such hearing aids, there are hearing instruments that are designed to support the hearing of normal-hearing users (i.e. persons without a hearing impairment). Such hearing instruments, being sometimes referred to as "Personal Sound Amplification Products" (PSAP), may be provided, e.g., to enhance the hearing of the wearer in complex acoustic environments or to protect the hearing of the wearer from damage or overstress.

Hearing instruments, in particular hearing aids, are typically designed to be worn in or at an ear of the user, e.g. as a Behind-The-Ear (BTE) or In-The-Ear (ITE) device. With respect to its internal structure, a hearing instrument normally comprises an (acousto-electrical) input transducer, a signal processor, and an output transducer. During operation of the hearing instrument, the input transducer captures a sound signal from an environment of the hearing instrument and converts it into an input audio signal (i.e. an electrical signal transporting a sound information). In the signal processor, the input audio signal is processed, in particular amplified dependent on frequency, e.g., to compensate the hearing-impairment of the user. The signal processor outputs the processed signal (also called output audio signal) to the output transducer. Most often, the output transducer is an electro-acoustic transducer (also called "receiver") that converts the output audio signal into a processed airborne sound which is emitted into the ear canal of the user. Alternatively, the output transducer may be an electro-mechanical transducer that converts the output audio signal into a structure-borne sound (vibrations) that is transmitted, e.g., to the cranial bone of the user.

Furthermore, besides classical hearing aids, there are implanted hearing aids such as cochlear implants, and hearing instruments the output transducers of which directly stimulate the auditory nerve of the user.

The term "hearing system" denotes one device or an assembly of devices and/or other structures providing functions required for the operation of a hearing instrument. A hearing system may consist of a single stand-alone hearing instrument. As an alternative, a hearing system may comprise a hearing instrument and at least one further electronic device which may, e.g., be one of another hearing instrument for the other ear of the user, a remote control, and a programming tool for the hearing instrument. Moreover, modern hearing systems often comprise a hearing instrument and a software application for controlling and/or programming the hearing instrument, which software application (hereinafter referred to as the "hearing app") is or can be installed on a computer, in particular a mobile communication device such as a mobile phone (smartphone). In the latter case, typically, the computer is not a part of the hearing system, but is only used by the hearing system as a resource of data storage, numeric power, and communication services. Most often, the computer (in particular, the mobile communication device) on which the hearing app is or may be installed will be manufactured and sold independently of the hearing system.

A severe problem of persons starting to use hearing instruments is speech intelligibility (i.e. the person's ability to understand speech). On the one hand, parts of these problems are caused by the fact that any hearing instrument alters or disturbs the natural sound to some extent, as a consequence of damping and/or signal processing by the hearing instrument. Thus, although the sound provided to the user may be amplified by the hearing instrument, as compared to the original ambient sound, information normally used by the human hearing (such as spectral cues or fast amplitude variations of the ambient sound or slight binaural amplitude differences or delays) may get lost. On the other hand, a hearing-impaired person who starts using a hearing aid may have suffered a more or less extended period of unsupported hearing loss before, during which the person's brain may have unlearned speech understanding. For the reasons mentioned above both hearing-impaired and normal hearing persons will normally have to train speech understanding when starting to use a hearing instrument. Conventional methods of training speech intelligibility often involve playing pre-recorded audio sequences containing phonemes or phoneme combinations to the user. Such phoneme combinations may each include a vowel to be understood embedded in a consonant environment (such as, e.g. "mom", "mum", "mem", ...) or a consonant to be understood embedded in a vowel environment (such as "akka", "alia", "atta", ...).

However, pre-recording the audio material for such training is time consuming and expensive. Moreover, as the requirements of different hearing instrument users vary greatly, it is difficult to create or select audio material to be used in speech intelligibility training that fits the requirements of the individual user. As a consequence, hearing instrument users who participate in conventional speech intelligibility training are often provided with a too little set of test audio sequences to achieve a robust benefit in real life noisy environments and/or with unsuited audio test sequences. Thus, for many hearing instrument users, conventional speech intelligibility training is a cumbersome and slow process without any promise of significant success.

It is, thus, an object of the present invention to provide a method for conducting a speech intelligibility training which method shall be time-efficient (with respect to the time required to achieve a significant training success), easy to implement and/or affordable to a large majority of individuals. It is another object of the present invention to provide an effective arrangement suited to perform the method.

According to the invention, the objects mentioned above are met by a method for conducting a speech intelligibility training according to claim 1 and an arrangement for conducting a speech intelligibility training according to claim 11. Preferred embodiments of the invention are described in the dependent claims and the subsequent description.

According to the method, a sound from an environment of a participant is recorded. Speech of a (first) speaker different from the participant is extracted from the recorded sound and at least one characteristic voice property and/or speech property of said (first) speaker is determined from the extracted speech. A (first) plurality of test audio sequences (also denoted "phoneme stimuli") are created, wherein each of said (first) plurality of test audio sequences contains synthesized speech of a phoneme or phoneme combination. According to the invention, the speech is synthesized so to conform with said at least one characteristic voice property and/or speech property of said (first) speaker.

In a (first) training step of the method,
- one of said test audio sequences from the (first) plurality of test audio sequences is chosen, converted into sound and output to the participant,
- a response of the participant indicating a phoneme or phoneme combination understood by the participant is collected, and
- a feedback is output to the participant, wherein said feedback informs the participant whether or not he or she indicated the correct phoneme or phoneme combination (i.e. whether or not the phoneme of phoneme combination indicated by the participant as being understood corresponds to the phoneme or phoneme combination that was actually output to the participant in this training step).

Herein and subsequently, the following definitions are used:
- The term "sound" generally refers to a signal that directly causes an auditory perception in the client. In particular, sound may be transported by pressure oscillations in air (air-borne sound) or vibrations in liquid or solid structure (structure-born sound) or an electric signal directly stimulating the auditory nerve of the participant.
- In contrast to "sound", the term "audio signal" denotes an electrical signal that transports a sound information and is converted into sound when fed to an output transducer.
- The term "speech" denotes spoken text that may either be spoken by a natural person or be a synthetic representation of spoken text (synthesized speech).
- In contrast to "speech", the term "voice" denotes sound produced by vocals chords of a human person or a synthetic representation of such sound, wherein "voice" will typically transport "speech" but may also transport a non-text information (e.g. humming).
- The "participant" is the person to which the method for conducting a speech intelligibility training is applied. Preferably, the participant is a user of a hearing instrument and, if the method is conducted using a hearing system, identical with the user of said hearing system. However, in some embodiments of the invention, the method may be applied to persons not using a hearing instrument.
- The or any "speaker different from the participant" will be also referred to as a "communication partner". Terms such as "first" or "second" speaker / communication partner are used for the sole purpose of uniquely labeling the respective speaker / communication partner; in particular, the terms "first" or "second" are not intended to specify an order of interaction of the speakers. Thus, in general, the first or second speaker / communication partner may be any person with whom the participant communicates.
- The at least one "voice property" is a measurable quantity characterizing the voice of the respective communication partner. E.g., the at least one voice property may be selected from the group consisting of pitch (fundamental frequency), harmonic structure and, of minor importance, intensity. The at least one "speech property" is a measurable quantity characterizing the speech of the respective communication partner, irrespective of voice features. E.g., the at least one speech property may be selected from the group consisting of speech rate (e.g. average number of syllables per second), intonation (i.e. speech melody) and pronunciation.
- A feedback informing the participant that he or she indicated the correct phoneme or phoneme combination is referred to as a "positive feedback", whereas a feedback informing the participant that he or she indicated an incorrect phoneme or phoneme combination (i.e. a phoneme or phoneme combination different from the phoneme or phoneme combination that was actually output in the (first) training step) is referred to as a "negative feedback".

The invention is based on the consideration that the participant is most familiar with the voice and speech characteristics of the persons with whom he or she communicates on a daily basis. Thus, as the participant will normally understand such known voices better than unknown voices, phoneme stimuli created in a known voice have a very high probability of being appropriate for the respective participant. Hence, presenting phoneme stimuli with known voice and/or speech characteristics is a very promising approach for quickly achieving training success.

In particular, hearing instrument users benefit from being presented with phoneme stimuli with known voice and speech characteristics, as they can recognize the known characteristics comparably easy even if these characteristics are altered by the signal processing of the hearing instrument. Another significant benefit of the invention is that collecting voice and speech characteristics in the environment of the participant and synthesizing phoneme stimuli based on these characteristics is easy to implement and involves little effort and financial outlay. The invention, thus, provides the possibility of gathering high-quality training material for speech intelligibility training being tailored to each individual participant in a time-efficient, very affordable (low-cost) manner that is accessible to a large number of individual users.

In general, the feedback provided to the participant at the end of the (first) training step can be provided in an arbitrary way that is perceivable by the user, e.g. as a text message or picture on a display or as an acoustic message. However, at least in case of a negative feedback (i.e. if the phoneme or phoneme combination indicated by the participant as being understood does not correspond to the phoneme or phoneme combination output to the participant), preferably, the feedback includes an acoustic message to be heard by the participant; the feedback, herein, contains speech sound of the phoneme or phoneme combination indicated by the participant as being understood and a repetition of the speech sound of the phoneme or phoneme combination output to the participant in the first training step. I.e., the phoneme or phoneme combination provided to the participant during the first training step is repeated and accompanied by the phoneme or phoneme combination the participant believed to understand; e.g. the feedback is provided as synthesized speech sound containing the words "Your selection was not correct. You selected "agga" but you heard "akka"." Herein, the speech sound of the phoneme or phoneme combination indicated by the participant as being understood is synthesized so to conform with said at least one characteristic voice property and/or speech property of said first speaker. In other words, in order to simplify comparison of the sounds of the two phonemes or phoneme combinations, the indicated phoneme or phoneme combination is synthesized with the same voice and/or speech characteristics as the phoneme or phoneme combination provided to the participant during the first training step.

In a preferred embodiment of the invention, in order to increase the diversity of the training material, speech of (at least) a second speaker different from the participant is extracted from the recorded sound, the at least one characteristic voice property and/or speech property of the said second speaker is determined from the extracted speech, and a second plurality of test audio sequences are created, wherein each of said second plurality of test audio sequences - as in the case of the first plurality of test audio sequences - contains synthesized speech of a phoneme or phoneme combination. However, different from the first plurality of test audio sequences, the speech of the second plurality of test audio sequences is synthesized so to conform with said at least one characteristic voice property and/or speech property of said second speaker.

In accordance with an embodiment of the invention, the plural pluralities of test audio sequences synthesized so to conform the voice and/or speech characteristics of different communication partners of the participant are used to vary the training pattern in particular in case the participant fails to successfully pass a training step. In this case, i.e. if in the first training step the phoneme or phoneme combination indicated by the participant as being understood does not correspond to the phoneme or phoneme combination output to the participant, in a second training step a test audio sequence from the second plurality of test audio sequences is selected, converted into sound and output to the participant, wherein said selected test audio sequence from the second plurality contains the same phoneme or phoneme combination as the test audio sequence output in the first training step. I.e., in case of a failed first training step, in the second training step the same phoneme or phoneme combination is presented again in a voice similar to that of the second speaker. In further respects, the second training step resembles the first training step in that a response of the participant indicating a phoneme or phoneme combination understood by the participant is collected, and a feedback is output to the participant whether or not the phoneme or phoneme combination indicated by the participant as being understood corresponds to the phoneme or phoneme combination output to the participant in the second training step.

In order to select the first speaker (and, if applicable, the second speaker) in an appropriate way, preferably, speech of a plurality of communication partners (preferably many more two speakers different from the participant) is extracted from the recorded sound. The extracted speech is evaluated, e.g. using statistical methods, with respect how frequently and/or for what period of time each of said speakers speaks. Herein, one of a number of the speakers who speak most frequently or for the longest period of time is selected as the first speaker. If applicable, preferably, another one of said number of speakers who speak most frequently or for the longest period of time is selected as the second speaker.

Herein, in advantageous embodiment of the invention, different from what might appear straight forward, the speaker who speaks most frequently or for the longest period of time is not selected as the first speaker, but as the second speaker. Instead, the speaker who speaks second most frequently or for the second longest period of time is selected as the first speaker. Thus, as speech understanding of the most familiar voice is most easy for the participant, the preferred training layout starts with a less easy training step first by presenting a phoneme stimulus in a less familiar voice, and reduces difficulty in the second training step, by repeating the phoneme stimulus with the most familiar voice, if the first training step fails. Thereby, training efficiency in increased.

Optionally, the recorded sound from the environment of the participant is de-noised before the at least one characteristic voice property and/or speech property of the respective speaker is determined from the extracted speech. In a preferred embodiment of the invention, de-noising (e.g. by active noise cancellation and/or beamforming) is combined with scene classifying (i.e. classification of pre-defined acoustic environments such as "speech in quiet", "speech in noise", etc.). The scene classifying is used to determine the degree of de-noising needed to allow determination of the at least one characteristic voice property and/or speech property with a satisfying quality. The goal is to know in advance how suitable the acoustic environment of the participant is for the intended "voice cloning" (recreation of the chosen voice from the environment), the best option being a "speech in quiet" environment. In less favorable environments, de-noising may be applied. In accordance with the invention, scene classifying may also be used to recognize current acoustic environments that are not suited for the determining the at least one characteristic voice property and/or speech property of communication partners. In such cases, the determination of voice and/or speech properties of communication partners may be stopped or denied or the participant may be prompted to change the acoustic environment.

Preferably, artificial intelligence (AI), e.g. a (deep) neural network is used to create the test audio sequences, in particular the first plurality of test audio sequences and, if applicable the second plurality of test audio sequences. Suitable AI models that can be used for this purpose, in accordance with the invention, are WaveNet (cf. A. van den Oord, et al., "WaveNet: A generative model for raw audio", 2016, https://arxiv.org/pdf/1609.03499.pdf), Tacotron (Y. Wang, "Tacotron: Towards End-to-End Speech Synthesis", 2017, https://arxiv.org/pdf/1703.10135.pdf), and a variational autoencoder (VAE).

In a particularly preferred embodiment of the invention, a hearing instrument worn at or in the ear of the participant is used to record the sound from the environment of the participant, and to output the or each test audio sequence to the participant. Moreover, preferably, the hearing instrument is used to extract the speech of the or each speaker different from the participant from the recorded sound. Using the hearing instrument allows for a very easy implementation of the invention as a large part of the technical functionality required for performing the method, e.g. means for recording sound from the environment of a user, means for outputting sound to the user, signal processing operable to recognize voice activity and the own voice of the user (and, thus, voice of speakers different from the user), scene classifiers, signal processing operable to de-noise the recorded sound, etc. are readily available in modern hearing instruments. On the other hand, creation of the test audio sequences is preferably performed by a remote computation service, in particular a cloud service, with which the hearing instrument is connected, directly or indirectly (e.g. via a mobile phone of the user) for data exchange.

In a further embodiment of the method according to the invention, at least one speaker different from the participant is prompted to speak a plurality of pre-defined phonemes or phoneme combinations. The phonemes or phoneme combinations spoken by said at least one speaker are recorded and stored as a plurality of test audio sequences. Each of said plurality of test audio sequences contains a respective phoneme or phoneme combination. A training step is conducted in which
one of said test audio sequences from the plurality is chosen, converted into sound and output to the participant. A response of the participant indicating a phoneme or phoneme combination understood by the participant is collected. A feedback is output to the participant whether or not the phoneme or phoneme combination indicated by the participant as being understood corresponds to the phoneme or phoneme combination output to the participant in the training step.

As mentioned above, a further embodiment of the invention is an arrangement for conducting a speech intelligibility training. A particular embodiment of the arrangement according to the invention is a hearing system comprising a hearing instrument, in particular a hearing aid, which hearing instrument may be realized in anyone of the embodiments described in the introduction part of this description, in particular as a BTE device or an ITE device. The hearing system may further comprise a mobile device or a software application (hearing app) to be installed on a mobile device (in particular a smartphone). In the latter case, preferably, the mobile device itself is not a part of the hearing system but manufactured and sold independently thereof.

In general, the arrangement (in particular the hearing system) according to the invention is configured to perform the method according to the invention. Moreover, any embodiment of the method has a corresponding embodiment of the arrangement. Therefore, all explanations and notes as to variations, advantages, and effects of the different embodiments of the method do equally apply and can be transferred to the corresponding embodiments of the arrangement, and vice versa.

In particular, the arrangement includes
- an input transducer for recording a sound from an environment of a participant,
- a signal analysis unit designed for extracting speech of a first speaker different from the participant from the recorded sound, determining at least one characteristic voice property and/or speech property of the said first speaker from the extracted speech, and
- a speech synthesis unit designed to create a first plurality of test audio sequences (phoneme stimuli), wherein each of said first plurality of test audio sequences contains synthesized speech of a phoneme or phoneme combination and the speech is synthesized so to conform with said at least one characteristic voice property and/or speech property of said first speaker.

The arrangement further includes a training unit designed to conduct a first training step in which
- one of said test audio sequences from the first plurality is selected, converted into sound and output to the participant,
- a response of the participant indicating a phoneme or phoneme combination understood by the participant is collected, and
- feedback whether or not the phoneme or phoneme combination indicated by the participant as being understood corresponds to the phoneme or phoneme combination output to the participant in the first training step is created which feedback is output to the participant via the output transducer of the hearing instrument.

If the arrangement is formed by a hearing system including a hearing instrument and a hearing app, then, preferably, the input transducer, the signal analysis unit and the output transducer are implemented in the hearing instrument, whereas the training unit is implemented as a part of the hearing app. In accordance with the invention, the speech synthesis unit may also be implemented as a part of the hearing app (or as a part of the hearing instrument). However, preferably, the speech synthesis unit is implemented as a remote service (e.g. implemented in a data cloud), with which the hearing instrument (or the hearing system) is connected for data transfer. In a further embodiment, at least a part of the signal analysis unit and the speech synthesis unit may be integrated in one unit which may, e.g., be an AI model.

In an embodiment of the invention, the training unit is designed to provide the feedback, if in the first training step the phoneme or phoneme combination indicated by the participant as being understood does not correspond to the phoneme or phoneme combination output to the participant, such that it contains speech sound of the phoneme or phoneme combination indicated by the participant as being understood and a repetition of the speech sound of the phoneme or phoneme combination output to the participant in the first training step. Herein, the speech sound of the phoneme or phoneme combination indicated by the participant as being understood is synthesized, by the speech synthesis unit, so to conform with said at least one characteristic voice property and/or speech property of said first speaker.

In another embodiment of the invention, the signal analysis unit is designed to extract speech of a second communication partner from the recorded sound, and to determine at least one characteristic voice property and/or speech property of the said second communication partner from the extracted speech. Herein, the speech synthesis unit is designed to create a second plurality of test audio sequences, wherein each of said second plurality of test audio sequences contains synthesized speech of a phoneme or phoneme combination and the speech is synthesized so to conform with said at least one characteristic voice property and/or speech property of said second communication partner. The training unit is designed to perform a second training step, as described above.

Preferably, the speech analysis unit is designed to extract speech of a plurality of communication partners from the recorded sound, evaluate the extracted speech with respect how frequently and/or for what period of time each of said speakers speaks, and select one of a number of speakers who speak most frequently or for the longest period of time is selected as the first (or second) speaker, as described above.

Preferably, the arrangement (in particular the hearing system) further comprises a signal processor (which may, e.g., be implemented as a part of the hearing instrument) designed to de-noise the recorded sound before the at least one characteristic voice property and/or speech property of the respective speaker is determined from the extracted speech.

Unless specified otherwise, the features of all embodiments of the method and all embodiments of the arrangement can be combined with each other, in accordance with the invention.

Subsequently, embodiments of the present invention will be described in more detail with reference to the accompanying drawings in which
- Fig. 1: shows a hearing system comprising a hearing instrument to be worn at the ear of a user and a software application (hearing app) installed on a mobile phone, wherein a method for training speech intelligibility of the user according to the invention is implemented as a function of the hearing app; and
- Fig. 2 to 4: show block diagrams of different embodiments of the hearing system of Fig. 1.

In the figures, like reference numerals always indicate like parts, structures and elements unless otherwise indicated.

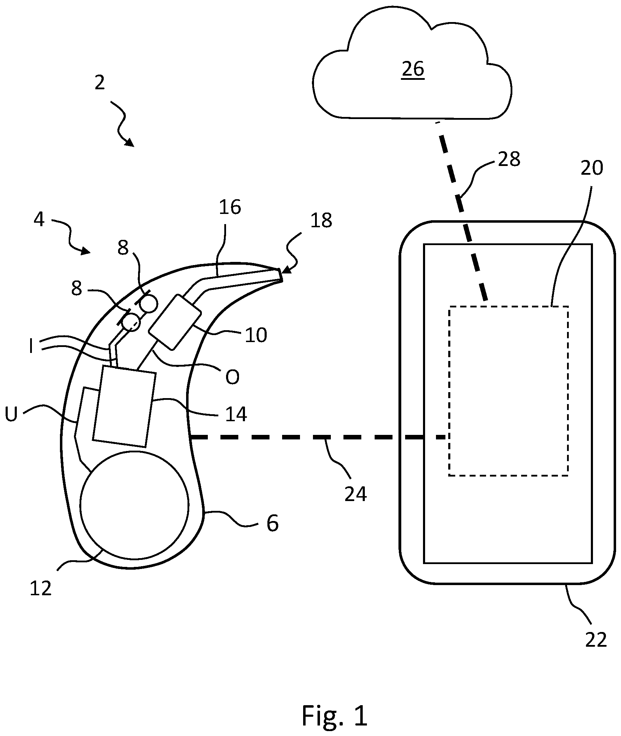

Fig. 1 shows a hearing system 2 comprising a hearing instrument 4 that is configured to be worn in or at one of the ears of a user. Preferably, the hearing instrument 4 is a hearing aid, i.e. a hearing instrument being configured to support the hearing of a hearing-impaired user. As shown in Fig. 1, by way of example, the hearing instrument 4 may be designed as a Behind-The-Ear (BTE) hearing instrument. Optionally, the system 2 comprises a second hearing instrument (not shown) to be worn in or at the other ear of the user to provide binaural support to the user.

The hearing instrument 4 comprises, inside a housing 6, two microphones 8 as input transducers and a receiver 10 as an output transducer. The hearing instrument 4 further comprises a battery 12 and a signal processor 14. Preferably, the signal processor 14 comprises both a programmable sub-unit (such as a microprocessor) and a non-programmable sub-unit (such as an ASIC).

The signal processor 14 is powered by the battery 12, i.e., the battery 12 provides an electric supply voltage U to the signal processor 14.

During normal operation of the hearing instrument 4, the microphones 8 capture an airborne sound signal from an environment of the hearing instrument 4. The microphones 8 convert the airborne sound into a (raw) input audio signal I (also referred to as the "captured sound signal"), i.e., an electric signal containing information on the captured sound. The input audio signal I is fed to the signal processor 14. The signal processor 14 processes the input audio signal I, e.g., to provide a directed sound information (beam-forming), to perform noise reduction and dynamic compression, and to individually amplify different spectral portions of the input audio signal I based on audiogram data of the user to compensate for the user-specific hearing loss. The signal processor 14 emits an output audio signal O (also referred to as the "processed sound signal"), i.e., an electric signal containing information on the processed sound to the receiver 10. The receiver 10 converts the output audio signal O into processed airborne sound that is emitted into the ear canal of the user, via a sound channel 16 connecting the receiver 10 to a tip 18 of the housing 6 and a flexible sound tube (not shown) connecting the tip 18 to an ear piece inserted in the ear canal of the user.

Further to the hearing instrument 4, the hearing system 2 comprises a software application (subsequently denoted "hearing app" 20), that is installed on a mobile phone 22 of the user. Herein, the mobile phone 22 is not a part of the hearing system 2. Instead, it is only used by the hearing system 2 as an external resource providing computing power, data storage (memory) and communication services.

The hearing instrument 4 and the hearing app 20 exchange data via a wireless link 24, e.g., based on the Bluetooth standard. To this end, the hearing app 20 accesses a wireless transceiver (not shown) of the mobile phone 22, in particular a Bluetooth transceiver, to send data to the hearing instrument 4 and to receive data from the hearing instrument 4.

The hearing app 20 includes functions to remote control, configure and update the hearing instrument 4. For this and other purposes, the hearing app 20 is connect to a remote cloud service 26, e.g. using a cellular connection 28 of the mobile phone 22 and the internet.

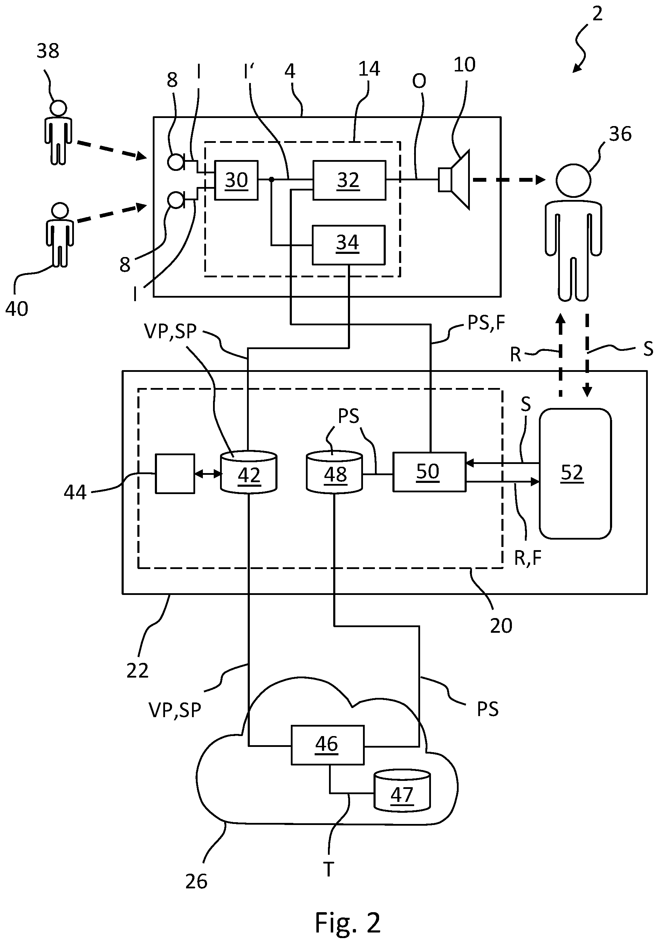

Fig. 2 shows the internal structure of a first embodiment of the hearing system 2 in greater detail. As can be seen in this figure, the signal processor 14 includes a pre-processing unit 30 designed to pre-process the input audio signal I, in particular to de-noise the input audio signal I by applying beam-forming and/or active noise-cancelling to the input audio signal I. The signal processor 14 further comprises a main processing unit 32 designed, e.g., to apply dynamic compression, and frequency-dependent amplification to a (pre-processed) input audio signal I' output by the pre-processing unit 30.

Furthermore, the signal processor 14 includes a signal analysis unit 34 designed to analyze the pre-processed input audio signal I' (or the raw input audio signal I). Inter alia, the analysis performed by the signal analysis unit 34 includes
- voice activity detection (VAD), i.e. detection of (any) voice in the input audio signal I', independent of a specific speaker,
- own voice analysis (OVD), i.e. selective detection of the own voice of the user in the input audio signal I', and
- scene classifying, i.e. analyzing the input audio signal I' in order to attribute the recorded sound to one of a number of pre-defined acoustic environments (sound classes) such as "speech in quiet", "speech in noise", "music", etc.

Moreover, the analysis unit 34 is designed to determine a number of predefined characteristic voice properties VP (e.g. pitch and harmonic structure) and/or speech properties SP (e.g. speech rate) from the input audio signal I' when the latter contains speech.

The signal analysis unit 34 is designed to control the pre-processing unit 30 and the main processing unit 32, based on the result of the signal analysis.

Preferably, the pre-processing unit 30, the main processing unit 32 and the signal analysis unit 34 are designed as software modules being installed and executable in the signal processor 14.

The hearing system 2 is designed to automatically perform a method for conducting a speech intelligibility training, for which purpose the hearing instrument 2, the hearing app 20 and, optionally, the cloud service 26 interact. The method is applied to the user of the hearing system 2, the user thus being a participant 36 of the speech intelligibility training.

The method starts with a preparation stage in which voice and/or speech characteristics of communication partners of the participant 36 are collected. The preparation stage can be performed automatically during operation of the hearing system 2. Optionally, the preparation stage can be started by a command of the user which command may be entered, e.g., in the hearing app 20.

In the preparation stage of said method, sound from the environment of the participant 36 is recorded by the microphones 8 of the hearing instrument 4. The recorded sound is analyzed by the signal analysis unit 34. Herein, the signal analysis unit 34 recognizes presence of speech of one or more communication partners of the participant 36 in the input audio signal I', e.g. by the fact that voice activity is detected whereas the own voice of the participant 36 is not detected. By way of example, two communications partners including a first communication partner 38 and a second communication partner 40, are depicted in Fig. 2.

The signal analysis unit 34 extracts the speech of the communication partners 38,40 from the input audio signal I' and determines the characteristic voice properties VP and/or speech properties SP from the extracted speech. The signal analysis unit 34 sends these voice properties VP and/or speech properties SP to the hearing app 20 that stores this information in a first (data) storage 42. Optionally, the signal analysis unit 34 controls de-noising of the input signal I, performed by the pre-processing unit 30, in dependence of the analysis result of scene-classifying (i.e.in dependence of the sound class, with which the recorded sound is found to correspond) in order ensure a sufficient quality of the extracted speech. For instance, de-noising is increased for the sound class "speech in noise" as compared to the sound class "speech in quiet".

A speaker recognition unit 44, here by way of example being implemented as a part of the hearing app 20, analyzes voice properties VP and/or speech properties SP for significant concordance and differences, thus identifying and distinguishing contributions of different speakers such as the communication partners 38 and 40. The speaker recognition unit 44 hereby determines how often and for what time the respective speaker speaks in order to, thus, rate the different speakers for their importance as communication partners of the participant 36. However, for reasons detailed above, the speaker recognition unit 44 selects the speaker (e.g. communication partner 40) who speaks most frequently or for the longest period of time, as the second speaker for the method, whereas the speaker (e.g. communication partner 38) who speaks second most frequently or for the second longest period of time, is selected as the first speaker for the method.

The hearing app 20 sends the stored voice properties VP and/or speech properties SP of both the first speaker (communication partner 38) and the second speaker (communication partner 38) to a speech synthesis unit 46. In the example of Fig. 2, the speech synthesis unit 46 is implemented in the cloud service 26.

The speech synthesis unit 46 includes a text-to-speech algorithm designed to create a set of test audio sequences PS (phoneme stimuli), wherein each of said test audio sequences PS contains synthesized speech of a phoneme combination which may include a consonant embedded in a vowel environment ("affa", "akka", "agga", etc.) or a vowel embedded in a consonant environment ("mom", "mam", "mem", etc.). Herein, the speech synthesis unit 46 uses the voice properties VP and/or speech properties SP provided by the hearing app 20 to synthesize the test audio sequences PS with a voice resembling one of the respective communication partner. In one embodiment of the method, the speech synthesis unit 46 may be adjusted to reproduce the voice and/or sound characteristics of the communications partners 38,40 as close possible. In an alternative embodiment of the method, the speech synthesis unit 46 may be adjusted to synthesize the test audio sequences PS in a plurality of voices that are similar, but not identical to the voice of the respective speaker. Presenting the phoneme stimuli in voices that are slightly modified as compared to a known voice enables a very robust training benefit in real world noisy environments as the brain of the participant 36 benefits from training with a variety of voices.

As a further input, the speech synthesis unit 46 receives text representations T of the phoneme combinations for which test audio sequences PS shall be created, from a data base 47. In particular, the speech synthesis unit 46 creates a first set of test audio sequences PS with voice and/or speech characteristics resembling that of the first speaker (communication partner 38) and a second set of test audio sequences PS with voice and/or speech characteristics resembling that of the second speaker (communication partner 40). The speech synthesis unit 46 sends the first and second set of test audio sequences PS to the hearing app 20 that stores said test audio sequences PS in a second (data) storage 48.

An execution stage of the method is controlled by a training unit 50 that is implemented as a part of the hearing app 20. In each one of a number of subsequent training steps, the training unit 50 chooses one of said test audio sequences PS from the data storage 48 (e.g. randomly) and feeds this chosen test audio sequence PS to the main processing unit 32 of the hearing instrument 4 to be processed and output to the participant 36, via the receiver 10. Herein, the processing by main processing unit 32 ensures that the chosen test audio sequence PS is adapted to the individual requirements of the participant 36; e.g. a hearing loss of the participant 36 is compensated by the processing. The phoneme combination thus output to the participant 36 is referred to as the "presented phoneme stimulus" of the respective training step.

Simultaneously with providing the selected test audio sequence PS (i.e. the presented phoneme stimulus) to the participant 36, the training unit 50 outputs a multi-choice request R on a display 52 of the mobile phone 22 prompting the participant 36 to select the phoneme combination he/she believes to have heard. If, e.g. the selected test audio sequence PS contained the phoneme combination "agga", the multi-choice request R may be presented in the form:
"What did you hear?
∘ alla
∘ affa
∘ agga
∘ akka
Please select."

Upon a selection S of one of the phoneme combinations specified in the request R by the participant 36, e.g. by tapping on the display 52 that may be realized as a touch-sensitive display, the training unit 50 outputs a feedback F to the participant 36 informing the latter on the correctness of the selection S.

The feedback F may be a positive feedback informing the participant 36 that his selection S was correct (if the participant 36 selected the phoneme combination as being understood that corresponds to the presented phoneme stimulus) or a negative feedback (if the participant 36 selected a phoneme combination as being understood that differs from the presented phoneme stimulus). The feedback F may be provided in visually perceivable form, via the display 52 of the mobile phone 22 or in acoustically perceivable form, via the main processing unit 32 and the receiver 10 of the hearing instrument 4 or - as is preferred - in a combination of both forms.

In case of a positive feedback, the training unit 50 outputs an audio message via the receiver 10 which audio message may repeat the presented phoneme stimulus. For instance, the audio sequence may contain the spoken words "You correctly selected the phoneme you heard: "agga".". The training unit 50 shows a confirmative text message or symbol on the display 52.

In case of a negative feedback, an audio message output by the training unit 50 via the receiver 10 may repeat the presented phoneme stimulus, followed by the phoneme combination indicated by the participant 36 as being understood. For instance, said audio message may contain the spoken words "Your selection was not correct. You heard "agga", but you selected "akka.". Herein, both phoneme combinations contained in the audio sequence are selected from first set of audio sequences from which the presented phoneme stimulus had been chosen by the training unit 50. Thus, both phoneme combinations are synthesized so to correspond to the voice of the same (first) speaker / communication partner 38. Again, the training unit 50 may show a corresponding text message or symbol on the display 52, as a further part of the negative feedback. However, the text message or symbol does not contain the presented phoneme stimulus, to ensure that the presented phoneme stimulus is only heard by the participant 36, not seen.

The training unit 50, then, performs a further training step, comprising the same of actions as the training step described above. However, the training unit 50 bases the decision on the phoneme stimulus to be presented on the result of the previous training step.

If the selection S of the participant 36 had been correct, in the previous training step, then the training unit 50 choses the phoneme stimulus to be presented from the first set of test audio sequences PS (corresponding to the voice of first speaker / communication partner 38), but the phoneme combination is chosen independently of the phoneme stimulus that had been presented in the previous training step.

If, however, the selection S of the participant 36 had been incorrect, in the previous training step, then the training unit 50 choses the same phoneme combination (e.g. "agga") again but now takes the respective test audio sequence (containing this phoneme combination) from the second set of test audio sequences PS (corresponding to the voice of second speaker / communication partner 40). Thus, in the further training step, the same phoneme combination is presented again, but now spoken in voice the participant 36 knows better.

If the participant 36 fails again to select the correct phoneme combination, then in a further training step the phoneme combination may be presented again, by the training unit 50, with an increased loudness and/or a reduced noise level. Additionally, or in a further step, the training unit 50 may show the phoneme combination as text on the display 52, in enable the participant 36 to see and read the information he/she had failed to understand.

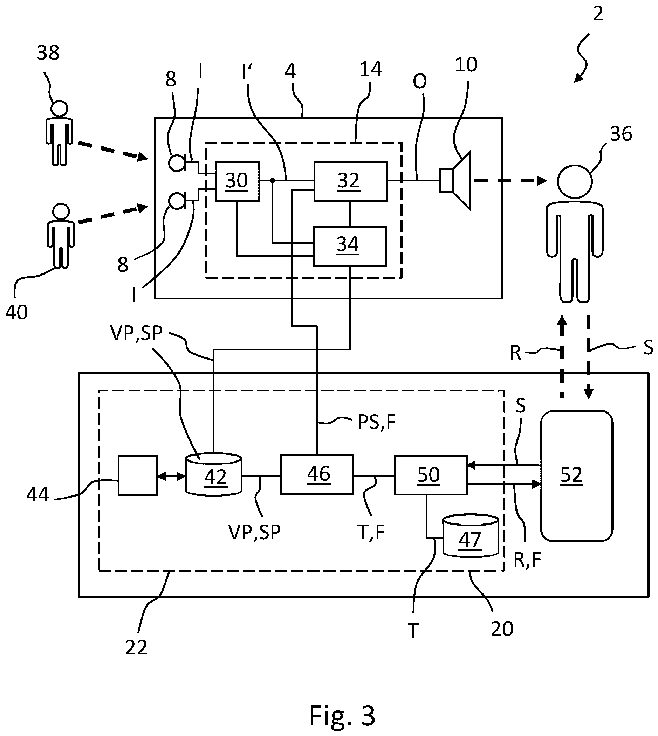

Fig. 3 shows a further variation of the hearing system 2 that corresponds to the embodiment of Fig. 2 except for the differences mentioned below. The main difference of the embodiment of Fig. 3 as compared to the embodiment of Fig. 2 is that the audio sequences PS are not created in the preparation stage of the method, preceding execution of the first training step. Instead, they are created in real-time in the execution step of the method. To this end, in the embodiment of Fig. 3, the speech synthesis unit 46 is connected between the training unit 50 and the main processing unit 32 of the hearing instrument 4. It creates the test audio sequences PS based on the voice properties VP and/or speech properties SP provided by the storage 42 and the respective text representation T of the phoneme combination to be presented which is provided by the training unit 50. The training unit 50 chooses the respective text representation T from the data base 47.

In the example of Fig. 3, different from Fig. 2, the speech synthesis unit 46 and the data base 47 are implemented locally in the mobile phone 22, as part of the hearing app 20. However, in variations of the embodiment of Fig. 3, at least one of the speech synthesis unit 46 and the data base 47 can be implemented in the cloud service 26, as in the example of Fig. 2.

Moreover, in further variations of the hearing system 2, at least one of the storage 42, the storage 48 and the training unit 50 can be implemented in in the cloud service 26.

Preferably, the speech synthesis unit 46 is implemented as an artificial intelligence (AI) model; e.g. a conventional text-to-speech model such as WaveNet, Tacotron or a variational autoencoder (VAE) can be used.

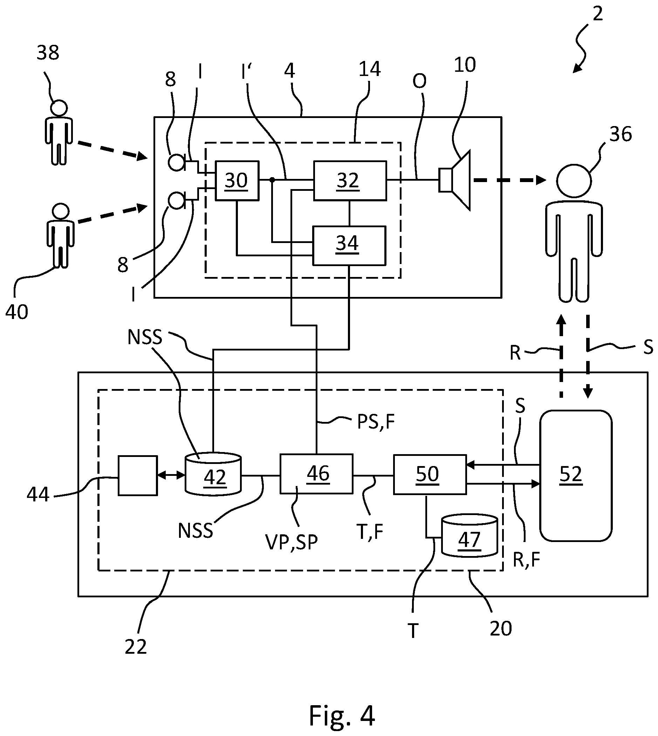

In a further embodiment of the hearing system 2, shown in Fig. 4, the speech synthesis unit 46 contains a deep neural network that is directly trained with natural speech of the communication partners 38,40 with whom the participant 36 communicates (in particular natural speech of communication partners 38 and 40). In this embodiment, the signal analysis unit 34 of the hearing instrument 4 does not determine the voice properties VP and/or speech properties SP. Instead, it sends natural speech sequences NSS (i.e. sequences of the input signal I' found to contain speech of one of the communication partners 38, 40) to the hearing app 20 that stores said natural speech sequences NSS in the storage 42. The storage 42 then provides the natural speech sequences NSS corresponding to one of the communication partners 38 and 40 to the speech synthesis unit 26 for training the neural network implemented therein to reproduce the voice and/or speech characteristic of the respective speaker in later text-to-speech conversion. A plurality of profiles corresponding to voice and/or speech characteristic of different speakers may be prepared and stored for the speech synthesis unit 26.

Any of the embodiments of the hearing system 2 described above can be extended to contain and use test audio sequences PS corresponding to voice and/or speech characteristics of more than two communication partners.

It will be appreciated by persons skilled in the art that numerous variations and/or modifications may be made to the invention as shown in the specific examples without departing from the spirit and scope of the invention as broadly described in the claims. The present examples are, therefore, to be considered in all aspects as illustrative and not restrictive.

### List of Reference Numerals

- 2: hearing system
- 4: hearing instrument
- 6: housing
- 8: microphone
- 10: receiver
- 12: battery
- 14: signal processor
- 16: sound channel
- 18: tip
- 20: hearing app
- 22: mobile phone
- 24: wireless link
- 26: cloud service
- 28: cellular connection
- 30: pre-processing unit
- 32: main processing unit
- 34: signal analysis unit
- 36: participant
- 38: communication partner
- 40: communication partner
- 42: (data) storage
- 44: speaker recognition unit
- 46: speech synthesis unit
- 47: data base
- 48: (data) storage
- 50: training unit
- 52: display

- F: feedback
- I: input audio signal
- I': (pre-processed) input audio signal
- NSS: natural speech sequence
- O: output audio signal
- PS: test audio sequences
- R: multi-choice request
- S: selection
- SP: speech property
- T: text representation
- U: supply voltage
- VP: voice property

## Claims

1. Method for conducting a speech intelligibility training,
- wherein a sound from an environment of a participant (36) is recorded,
- wherein speech of a first speaker (38) different from the participant (36) is extracted from the recorded sound,
- wherein at least one characteristic voice property (VP) and/or speech property (SP) of the said first speaker (38) is determined from the extracted speech,
- wherein a first plurality of test audio sequences (PS) are created, wherein each of said first plurality of test audio sequences (PS) contains synthesized speech of a phoneme or phoneme combination and the speech is synthesized so to conform with said at least one characteristic voice property (VP) and/or speech property (SP) of said first speaker (38),
- wherein a first training step is conducted in which
- one of said test audio sequences (PS) from the first plurality is chosen, converted into sound and output to the participant (36),
- a response (S) of the participant (36) indicating a phoneme or phoneme combination understood by the participant (36) is collected, and
- a feedback (F) is output to the participant (36) whether or not the phoneme or phoneme combination indicated by the participant (36) as being understood corresponds to the phoneme or phoneme combination output to the participant (36) in the first training step.

2. Method according to claim 1,
wherein, if in the first training step the phoneme or phoneme combination indicated by the participant (36) as being understood does not correspond to the phoneme or phoneme combination output to the participant (36), then the feedback (F) contains speech sound of the phoneme or phoneme combination indicated by the participant (36) as being understood and a repetition of the speech sound of the phoneme or phoneme combination output to the participant (36) in the first training step, wherein the speech sound of the phoneme or phoneme combination indicated by the participant (36) as being understood is synthesized so to conform with said at least one characteristic voice property and/or speech property of said first speaker (38).

3. Method according to claim 1 or 2,
- wherein speech of a second speaker (40) different from the participant (36) is extracted from the recorded sound,
- wherein at least one characteristic voice property (VP) and/or speech property (SP) of the said second speaker (40) is determined from the extracted speech,
- wherein a second plurality of test audio sequences (PS) are created, wherein each of said second plurality of test audio sequences (PS) contains synthesized speech of a phoneme or phoneme combination and the speech is synthesized so to conform with said at least one characteristic voice property (VP) and/or speech property (SP) of said second speaker (40),
- wherein, if in the first training step the phoneme or phoneme combination indicated by the participant (36) as being understood does not correspond to the phoneme or phoneme combination output to the participant (36), then in a second training step
- a test audio sequence (PS) from the second plurality is chosen, converted into sound and output to the participant (36), wherein said chosen test audio sequence (PS) from the second plurality contains the same phoneme or phoneme combination as the test audio sequence (PS) output in the first training step,
- a response (S) of the participant (36) indicating a phoneme or phoneme combination understood by the participant (36) is collected, and
- a feedback (F) is output to the participant (36) whether or not the phoneme or phoneme combination indicated by the participant (36) as being understood corresponds to the phoneme or phoneme combination output to the participant (36) in the second training step.

4. Method according to one of claims 1 to 3,
- wherein speech of a plurality of speakers (38,40) different from the participant (36) is extracted from the recorded sound,
- wherein the extracted speech is evaluated with respect how frequently and/or for what period of time each of said speakers (38,40) speaks, and
- wherein one of a number of speakers who speak most frequently or for the longest period of time is selected as the first speaker (38).

5. Method according to claims 3 and 4,
wherein the speaker who speaks most frequently or for the longest period of time is selected as the second speaker (40), whereas the speaker who speaks second most frequently or for the second longest period of time is selected as the first speaker (38).

6. Method according to one of claims 1 to 5,
wherein the recorded sound from the environment of the participant (36) is de-noised before the at least one characteristic voice property (VP) and/or speech property (SP) of the respective speaker (38,40) is determined from the extracted speech.

7. Method according to one of claims 1 to 6,
wherein the test audio sequences (PS) are created using artificial intelligence, in particular an artificial neural network.

8. Method according to one of claims 1 to 7,
wherein a hearing instrument (4) worn at or in the ear of the participant (36) is used to record the sound from the environment of the participant (36), and to output the or each test audio sequence (PS) to the participant (36).

9. Method according to claim 8,
wherein the hearing instrument (4) is used to extract the speech of the or each speaker (38,40) different from the participant (36) from the recorded sound.

10. Method for conducting a speech intelligibility training,
- wherein at least one speaker (38,40) different from the participant (36) is prompted to speak a plurality of pre-defined phonemes or phoneme combinations,
- wherein the phonemes or phoneme combinations spoken by said at least one speaker (38,40) are recorded and stored as a plurality of test audio sequences (PS), wherein each of said plurality of test audio sequences (PS) contains a respective phoneme or phoneme combination,
- wherein a training step is conducted in which
- one of said test audio sequences (PS) from the plurality is selected, converted into sound and output to the participant (36),
- a response (S) of the participant (36) indicating a phoneme or phoneme combination understood by the participant (36) is collected, and
- and a feedback (F) is output to the participant (36) whether or not the phoneme or phoneme combination indicated by the participant (36) as being understood corresponds to the phoneme or phoneme combination output to the participant (36) in the training step.

11. Arrangement for conducting a speech intelligibility training, in particular a hearing system (2), designed to automatically perform the method according to one of claims 1 to 10.
